# FASCICULE DE BREVET EUROPEEN

(11) **EP 3 524 770 B1**
(45) Date de publication et mention de la délivrance du brevet: **03.03.2021**
(21) Numéro de dépôt: 19153379.3
(22) Date de dépôt: 23.01.2019
(51) Int. Cl.: E06C 7/42, E06C 1/22, F16B 7/14

(54) **SYSTEME DE BLOCAGE DE TUBE, ET STABILISATEUR MUNI D'UN TEL SYSTEME**
ROHRBLOCKIERSYSTEM UND STABILISATOR, DER MIT EINEM SOLCHEN SYSTEM AUSGESTATTET IST
SYSTEM FOR BLOCKING A TUBE, AND STABILISER PROVIDED WITH SUCH A SYSTEM

(30) Priorité: 07.02.2018 FR 1851016
(43) Date de publication de la demande: 14.08.2019
(73) Titulaire: CDH Group, 27610 Romilly sur Andelle (FR)
(72) Inventeur: MOREL, Olivier, 27610 ROMILLY SUR ANDELLE (FR); HAUTIER, Rémi, 27610 ROMILLY SUR ANDELLE (FR)
(74) Mandataire: Demulsant, Xavier

(56) Documents cités:
- EP-A1- 2 213 885
- WO-A1-03/010439
- WO-A2-2004/092525
- FR-A- 1 169 142
- KR-A- 20140 121 494

## Description

L'invention a trait au domaine des dispositifs de stabilisation destinés à être montés sur des équipements de travail en hauteur.

Plus particulièrement, l'invention se rapporte à un système de blocage de stabilisateurs équipant un dispositif de travail en hauteur.

Par *"dispositifs de travail en hauteur",* il est fait référence en particulier à des escabeaux selon la norme NF EN 14183, des échelles portables selon la norme NF EN 131 EN, des échafaudages roulants au sens des normes NF EN 1004 et NF P 93-520, ainsi que des plateformes roulantes au sens des normes NF 93-353 et NF 93-352.

Les équipements de travail en hauteur répondent à des normes de sécurité strictes, afin d'assurer la sécurité des utilisateurs, et en particulier afin de limiter les risques de chute.

Les chutes de hauteur ont été en 2016 à l'origine de 16% des incapacités permanentes et à l'origine de 16% des décès liés à des accidents du travail en France, tous domaines confondus (voir Rapport de gestion 2016 de l'Assurance maladie Risques professionnels, partie 5 - Sinistralité tous CTN, tableau 2, P.12).

De telles chutes peuvent provenir d'un renversement du dispositif de travail en hauteur, en particulier pour les plateformes roulantes ou les échelles.

Afin d'éviter la survenue d'un pareil accident, la réglementation applicable relative au travail en hauteur, notamment les articles R. 4323-81 à R. 4323-88 du code du travail, soumet les dispositifs de travail en hauteur à un certain nombre de prescriptions, et notamment le fait d'être stable en utilisation.

Pour parvenir à un tel résultat, il est connu de munir le dispositif de travail en hauteur de stabilisateurs.

De tels stabilisateurs se présentent généralement sous la forme de tubes télescopiques, offrant un réglage en hauteur.

Les stabilisateurs ainsi équipés de tels tubes peuvent prendre appui sur le sol environnant le dispositif de travail en hauteur, quelle que soit la dénivellation, dans la limite de la longueur des tubes.

De cette façon, les stabilisateurs confèrent une stabilité au dispositif de travail en hauteur, notamment en limitant le risque de renversement latéral lorsqu'un utilisateur en fait usage.

Les stabilisateurs présentent en général une extrémité articulée à un élément de l'équipement de travail en hauteur, de manière à faciliter leur transport et leur déploiement.

Lors du déplacement de l'équipement de travail, le stabilisateur est généralement rétracté, puis accroché directement au dispositif de travail en hauteur, par l'intermédiaire de dispositifs prévus à cet effet.

Les stabilisateurs peuvent être distingués en différentes catégories, selon le mode de réglage en hauteur qu'ils offrent.

Pour une première catégorie de stabilisateurs, le réglage en hauteur s'effectue par positions prédéterminées, comme divulgué par exemple dans le document US 3901354, qui propose un système comprenant un pion venant se positionner au sein d'encoches agencées dans l'un des tubes. Des modes de blocage similaires sont également présentés dans les documents US 1610596, US 3508628, US 4175641, US 4433754, US 4947962, US 2008000721. De tels modes de blocage ne permettent pas un réglage précis de la hauteur d'un stabilisateur, en raison de l'espacement trop important entre les positions prédéterminées. Un utilisateur peut ainsi se trouver dans une situation où un appui stable est impossible, l'obligeant à déplacer le dispositif de travail en hauteur, pour être en mesure de trouver une surface d'appui pour les stabilisateurs.

Dans une deuxième catégorie de stabilisateurs, le réglage en hauteur est obtenu par un réglage dit millimétrique, c'est-à-dire sur une plage de réglage prédéterminée. Un tel réglage est obtenu en munissant le stabilisateur d'un moyen permettant de verrouiller et déverrouiller entre eux les tubes télescopiques. Pour régler la hauteur du stabilisateur, l'utilisateur déverrouille les tubes entre eux, ajuste la longueur à la dimension souhaitée, en déplaçant un des tubes, puis verrouille les tubes entre eux.

Pour réaliser un tel réglage millimétrique, des montages à bague de serrage ont été décrits, par exemple dans les documents US 4872529, GB 2180875, ou WO 2012168684. Cependant, de tels montages à bague n'offrent pas une sécurité optimale, car rien n'indique à l'utilisateur que le couple de serrage est suffisant pour permettre un blocage sécurisé des tubes entre eux. En outre, une telle bague, en particulier lorsque réalisée en matériau thermoplastique, peut se détériorer à force d'être serrée et desserrée de manière répétitive. De plus, la mise en place d'un stabilisateur équipé de bague ne se fait pas sans difficultés. L'utilisateur doit en effet d'abord desserrer la bague, positionner le stabilisateur en positionnant les tubes l'un à l'autre, puis resserrer la bague, tout en conservant la position du stabilisateur. Un tel montage nécessite l'usage des deux mains sur le stabilisateur, et une certaine dextérité de la part de l'utilisateur, pour conserver la position lors du serrage de la bague.

Il est également connu de munir une paroi d'un tube d'un stabilisateur d'une vis, apte à venir serrer le tube par adhérence. Un tel principe est par exemple divulgué dans le document US 3856112. Néanmoins, l'usage d'un tel système à vis, bien que simple et peu onéreux à fabriquer, ne permet pas de répondre aux inconvénients des systèmes à bagues évoqués ci-dessus. De surcroît, l'usage d'une vis peut s'avérer être destructif pour le tube serré, la vis pouvant laisser des traces, ou marques sur le tube bloqué. En outre, le tube servant de support à la vis est fragilisé, car percé pour permettre l'insertion de la vis.

Afin de pallier les inconvénients des systèmes présentés ci-dessus, il a été proposé d'utiliser un arc-boutement pour bloquer entre eux les tubes d'un stabilisateur.

Ainsi, le document FR 1169142 propose un support d'appui comprenant deux tubes montés coulissants l'un par rapport à l'autre. Un premier tube est muni d'un manchon comprenant un évidement conique, afin d'autoriser le déplacement d'une plaque de verrouillage. La plaque est traversée par un deuxième tube, au travers d'une ouverture. La plaque est courbée et présente à son extrémité une partie formant poignée. Lorsqu'aucun effort n'est appliqué sur la poignée, le ressort pousse la plaque vers le bas, verrouillant les tubes entre eux, la libération de la plaque étant réalisée par appui sur la partie basse de la poignée.

Le mécanisme décrit dans le document FR 1169142 présente divers inconvénients. La poignée est située à une localisation empêchant une préhension facile. L'utilisateur est obligé de positionner ses deux mains pour manipuler le stabilisateur. De plus, la position du ressort rend le réglage peu précis, la plaque réalisant l'arc-boutement n'étant pas guidée, de sorte que l'utilisateur doit appuyer sur la partie inférieure de la poignée afin de permettre le déplacement de la plaque. L'utilisateur doit donc positionner sa main à un emplacement très précis, sur la poignée, rendant le manchon peu commode d'utilisation.

Le document FR 2946989 divulgue une jambe de stabilisation munie d'un organe de verrouillage permettant d'allonger ou raccourcir la jambe. L'actionnement du dispositif de stabilisation s'effectue par sollicitation d'une poignée en L, permettant la libération d'une coulisse d'étayage. La manipulation d'un tel système entraîne des risques de coincement, le ressort étant disposé au voisinage de la surface de préhension, c'est à dire à proximité de l'endroit où l'utilisateur positionne ses doigts pour solliciter la poignée. En outre, la poignée est disposée dans un sens peu intuitif, nécessitant à l'utilisateur de tourner sa main, ce qui est peu ergonomique. Par ailleurs, une telle poignée ne permet pas le déploiement d'un stabilisateur d'un seul geste, puisque pour descendre la coulisse d'étayage, l'utilisateur doit appuyer d'une main sur la poignée, tout en descendant la coulisse de l'autre main. Le document EP2213885 décrit un dispositif de support comportant au moins un pied de support pour appareil photo ou caméras, formé d'un tube extérieur et d'un tube intérieur reliés entre eux de manière télescopique et muni d'un dispositif de serrage comportant un manchon qui est fixé à une extrémité du tube extérieur. Ce document montre un système de blocage selon le préambule de la revendication 1.

L'invention se propose de répondre aux inconvénients précités.

Un premier objet de l'invention est de proposer un système de blocage de tubes télescopiques de stabilisateur, pour un équipement de travail en hauteur, le système de blocage permettant un déploiement du stabilisateur d'une seule main.

Un deuxième objet de l'invention est de proposer un tel système, ergonomique et sans risque pour l'utilisateur, notamment en terme de coincement de doigts.

Un troisième objet de l'invention est de proposer un tel système, facile à monter et présentant des coûts d'obtention réduits.

Un quatrième objet de l'invention est de proposer un stabilisateur muni d'un tel système.

Un cinquième objet de l'invention est de proposer un équipement pour le travail en hauteur comprenant un tel stabilisateur.

A cet effet, il est proposé, en premier lieu, un système de blocage du coulissement d'un premier tube par rapport à un deuxième tube d'un stabilisateur d'un dispositif de travail en hauteur, le système de blocage comprenant :
- un moyen de support, destiné à être solidaire du deuxième tube, le moyen de support comprenant un bossage ;
- un levier comprenant une partie d'actionnement, et une partie de blocage, disposées de part et d'autre du bossage, la partie de blocage comprenant une ouverture destinée au déplacement du premier tube, le levier pivotant autour du bossage entre une position de déblocage, apte à permettre le déplacement du premier tube, et une position de blocage, apte à permettre le positionnement du premier tube en arc-boutement sur l'ouverture ;
- un moyen de rappel, disposé entre le moyen de support et la partie de blocage, exerçant un effort de rappel sur la partie de blocage maintenant le levier en position de blocage, le moyen de rappel exerçant un effort de poussée sur la partie de blocage, de sorte qu'une action de pression appliquée sur la partie d'actionnement fasse pivoter le levier entraînant le positionnement du moyen de blocage en position de déblocage,
le levier (22) se présentant sous la forme d'une plaque munie de la partie (25) d'actionnement et de la partie (26) de blocage.

Diverses caractéristiques supplémentaires peuvent être prévues, seules ou en combinaison :
- le moyen de support comprend un boitier entourant la partie de blocage et le moyen de rappel ;
- le boitier comprend un évidement présentant des dimensions complémentaires à la partie d'actionnement ;
- le boitier comprend un alésage destiné au passage du premier tube et une fraction de forme cylindrique de dimension supérieure à l'alésage, la fraction de forme cylindrique étant destinée à être emmanchée sur le deuxième tube ;
- le bossage est pourvu une section d'appui comprenant une surface incurvée, en contact avec le levier, la section d'appui étant configurée pour permettre la rotation du levier ;
- le moyen de rappel comprend un plot élastique déformable ;
- il comprend un bouton, monté enfoncé et maintenu enclipsé sur une portion extrême de la partie d'actionnement

Il est proposé, en deuxième lieu, un stabilisateur télescopique d'un dispositif de travail en hauteur, le stabilisateur comprenant :
- un premier tube,
- un deuxième tube,
- un système de blocage tel que présenté ci-dessus, le système de blocage étant solidaire par rapport au deuxième tube, le premier tube traversant l'ouverture.

Il est proposé, en troisième lieu, un dispositif de travail en hauteur intégrant un stabilisateur tel que présenté ci-dessus.

D'autres caractéristiques et avantages de l'invention apparaîtront plus clairement et de manière concrète à la lecture de la description ci-après de modes de réalisation, laquelle est faite en référence aux dessins annexés dans lesquels :
- la figure 1 représente une vue schématique en perspective d'une échelle munie de deux stabilisateurs comprenant chacun un système de blocage, un médaillon représentant en détail une partie d'un stabilisateur ;
- la figure 2 représente une vue schématique en perspective d'un stabilisateur, le stabilisateur étant illustré en position rangée ;
- la figure 3 représente une vue schématique en perspective d'un stabilisateur, le stabilisateur étant illustré en cours de déploiement ;
- la figure 4 représente une vue schématique en perspective d'un stabilisateur, le stabilisateur étant illustré en position déployée ;
- la figure 5 représente une vue schématique en perspective du système de blocage ;
- la figure 6 représente une vue schématique en perspective du système de blocage, le levier, le bouton et le plot étant représentés en traits pleins, les autres pièces étant représentées en traits pointillés ;
- la figure 7 représente une vue schématique en coupe par rapport au plan de coupe A-A de la figure 5, le système de blocage étant illustré en position de blocage ;
- la figure 8 représente une vue schématique en coupe par rapport au plan de coupe A-A de fa figure 5, le système de blocage étant illustré en positon de déblocage ;
- la figure 9 représente une vue schématique en coupe du système de blocage, selon le plan de coupe B-B de la figure 7 ;
- la figure 10 représente une vue schématique en coupe du boitier et du deuxième tube du système de blocage, selon le plan de coupe B-B de la figure 7.

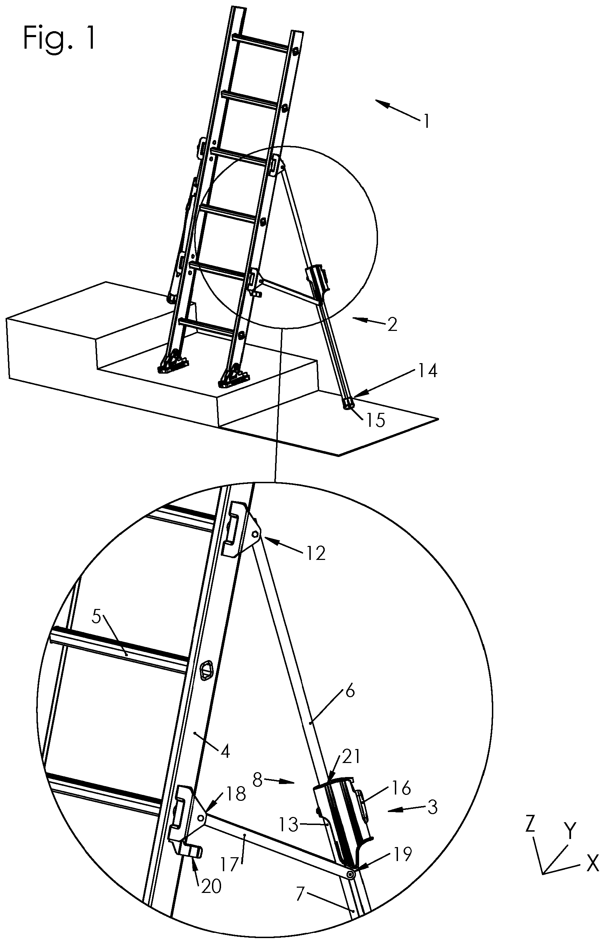

L'on se réfère à la figure 1 représentant un dispositif 1 de travail en hauteur, muni par exemple de deux stabilisateurs 2 télescopiques, comprenant chacun un système 3 de blocage.

Les stabilisateurs **2** ont notamment une fonction stabilisatrice, en formant des appuis qui réduisent le risque de renversement latéral du dispositif **1** de travail, lorsqu'un utilisateur monte dessus.

De manière non limitative, le dispositif **1** de travail en hauteur est une échelle **1,** comprenant deux montants **4** parallèles reliés par des traverses **5.**

Dans d'autres modes de réalisation, non représentés, le dispositif **1** de travail en hauteur est un marchepied, un escabeau, une plateforme individuelle roulante, une plateforme individuelle roulante légère, ou un échafaudage.

Selon les modes de réalisation représentés, les stabilisateurs **2** de l'échelle **1** sont symétriques l'un de l'autre. Par conséquent, l'on se limite à la description d'un seul stabilisateur **2,** l'autre stabilisateur **2** étant structurellement identique à une symétrie près, par rapport à un plan perpendiculaire aux traverses **5,** le plan intersectant le milieu des traverses **5.**

Dans les modes de réalisation représentés, le stabilisateur **2** comprend un premier tube **6,** monté coulissant dans un deuxième tube **7,** de sorte à former un ensemble **8** télescopique.

Les tubes **6, 7** sont avantageusement métalliques, par exemple en alliage d'aluminium, ce qui leur confère une masse réduite, et facilite leur manipulation par l'utilisateur.

Dans les modes de réalisation représentés, le premier tube 6 est un cylindre creux, avantageusement profilé, ce qui facilite la fabrication.

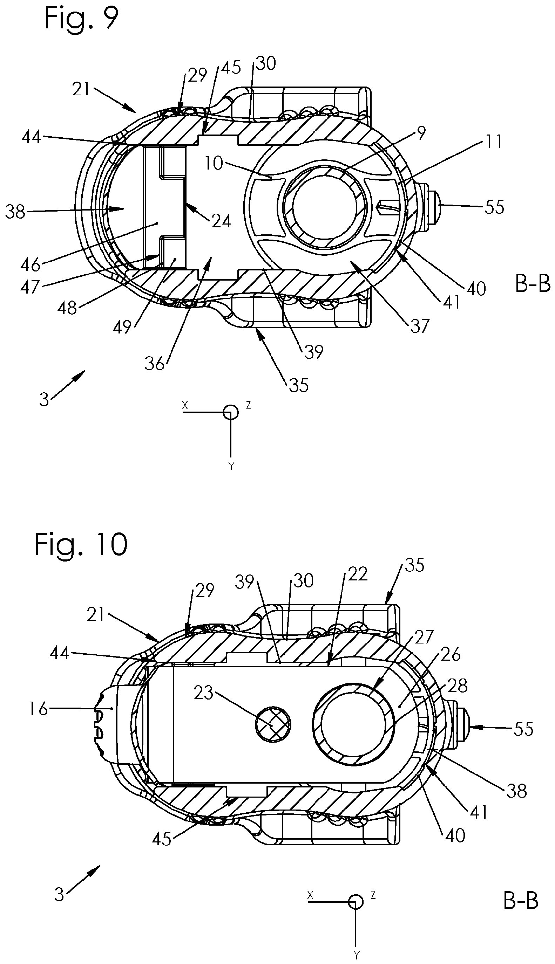

Comme représenté notamment sur la figure 9, le deuxième tube **7** comprend un cylindre creux **9** interne, recevant le premier tube **6** en coulissement. Le cylindre creux **9** interne est relié par l'intermédiaire de nervures **10** à un cylindre creux **11** externe. Une telle disposition permet de renforcer la rigidité du deuxième tube **7,** évitant un fléchissement du deuxième tube 7 lorsque l'utilisateur monte sur l'échelle **1.**

Comme il peut être constaté sur les figures **1** à 4, le premier tube **6** comprend une première extrémité **12** articulée au montant **4,** de façon à permettre le déplacement du stabilisateur **2,** ainsi qu'une deuxième extrémité (non visible sur les figures) insérée au sein du deuxième tube **7.**

Le deuxième tube **7** présente une première partie **13** extrême, destinée à entrer en contact avec le sol, et une deuxième partie **14** extrême, permettant l'arrêt du système **3** de blocage, comme décrit plus loin.

Afin de protéger le deuxième tube **7** et éviter l'introduction de corps étrangers au sein du stabilisateur, la première partie **13** extrême est recouverte d'un bouchon **15** protecteur, réalisé par exemple en matériau thermoplastique.

Comme il peut être observé sur les figures, le système **3** de blocage permet de bloquer la translation du premier tube **6** par rapport au deuxième tube **7.**

Dans le mode de réalisation représenté, la translation du premier tube **6** par rapport au deuxième tube **7** peut être débloquée, dans le sens du déploiement du stabilisateur **2,** en exerçant un effort de traction sur le premier tube **7,** c'est-à-dire un effort présentant une intensité supérieure à une valeur prédéfinie, visant à écarter le premier tube **6** du deuxième tube **7.** Une telle disposition autorise à l'utilisateur de déployer le stabilisateur **2** par exemple en tirant uniquement sur le deuxième tube **7.**

La translation du premier tube **6** par rapport au deuxième tube **7** est débloquée dans le sens du déploiement et dans le sens de la rétraction du stabilisateur **2,** à l'aide d'une action sur un bouton **16** intégré au sein du système **3** de blocage, le bouton **16** étant rendu accessible à l'utilisateur.

L'actionnement du bouton **16** est un moyen de réglage de la longueur de l'ensemble **8** télescopique, permettant selon la position souhaitée de rétracter ou déployer le stabilisateur **2.** Une action de traction sur le deuxième tube **7** est un moyen de réglage en déploiement du stabilisateur **2.** De telles dispositions permettent d'adapter la longueur du stabilisateur **2** à toute configuration de sol, dans la limite de la longueur maximale d'extension du stabilisateur **2.** Le stabilisateur **2** offre un réglage continu, qualifié de millimétrique.

Dans les modes de réalisation représentés, le stabilisateur **2** comprend une biellette **17,** qui agit notamment en tant que renfort au niveau du deuxième tube **7,** en reprenant les sollicitations de flexion, ce qui rigidifie le stabilisateur **2,** rendant l'utilisation de l'échelle **1** plus sûre.

La biellette **17** comprend un premier bout 18 extrême, pivotant par rapport au montant **4,** et un deuxième bout **19** extrême, pivotant par rapport au deuxième tube **7,** de manière à conférer au deuxième tube **7** un mouvement de translation circulaire. Une telle disposition a notamment pour fonction de guider le mouvement de pivotement de l'ensemble **8** télescopique par rapport au montant **4.** Le stabilisateur **2** prend ainsi alors la constitution d'un système articulé, contribuant à le rendre manipulable d'une seule main.

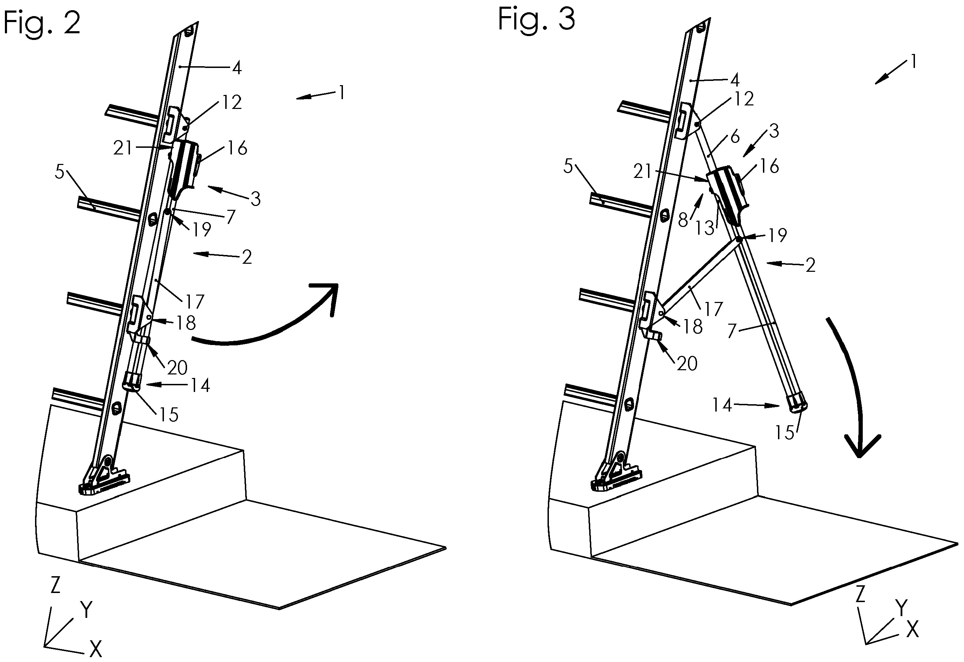

L'on se réfère à présent aux figures 2 à 4 représentant différentes positions possibles du stabilisateur **2.**

Sur la figure 2, le stabilisateur **2** est en position rangée, l'ensemble **8** télescopique étant rétracté. Dans une telle configuration, la biellette **17** et l'ensemble **8** télescopique sont accrochés parallèlement au montant, par exemple par l'intermédiaire d'un dispositif **20** d'accrochage par enclipsage. Le système **3** de blocage est alors dans un état de blocage, immobilisant l'ensemble **8** télescopique, et par extension le stabilisateur **2.** Le stabilisateur **2** est donc maintenu immobile à la fois par le système **3** de blocage et le dispositif **20** d'accrochage. Une telle redondance évite un décrochage intempestif du stabilisateur **2** de sa position de rangement, y compris lorsque le dispositif **20** d'accrochage est défaillant.

Afin de permettre le déploiement du stabilisateur **2,** un effort de traction est exercé sur le deuxième tube **7,** à l'encontre du dispositif **20** d'accrochage. L'utilisateur positionne par exemple une main sur le système **3** de blocage, et son autre main sur le montant **4,** ce qui permet de prendre appui pour réaliser le décrochage du stabilisateur **2** du montant **4.**

Dans la figure 3, le stabilisateur **2** est représenté en cours de déploiement dans une position intermédiaire. L'utilisateur poursuit l'effort de traction permettant de faire basculer le deuxième tube **7.** La biellette **17** dans le déploiement du stabilisateur **2** guide le mouvement de descente du stabilisateur **2.** Le stabilisateur est alors manipulable d'une seule main, l'autre main maintenant par exemple l'échelle **1** pour éviter qu'elle ne se déplace.

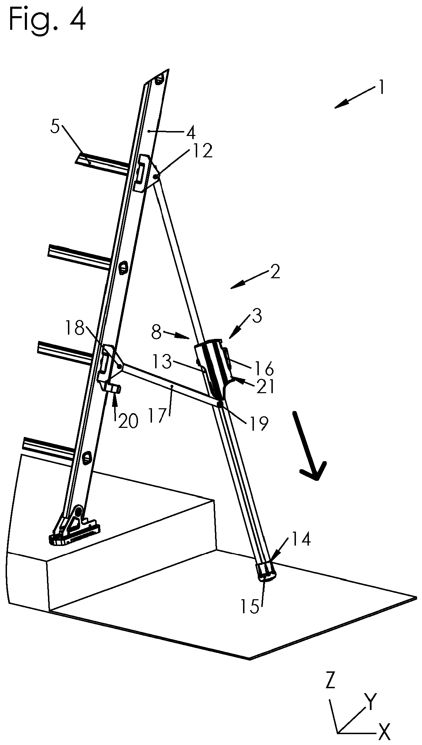

Sur la figure 4, le stabilisateur **2** est dans une position déployée, permettant de réaliser le soutien du dispositif **1** de travail en hauteur, la première partie **13** extrême étant en contact avec le sol. L'utilisateur relâche le stabilisateur **2,** la position souhaitée étant obtenue.. En déployant les deux stabilisateurs **2,** l'utilisateur réalise un étayage de l'échelle **1,** qui est ainsi rendue stable, limitant le risque de renversement latéral.

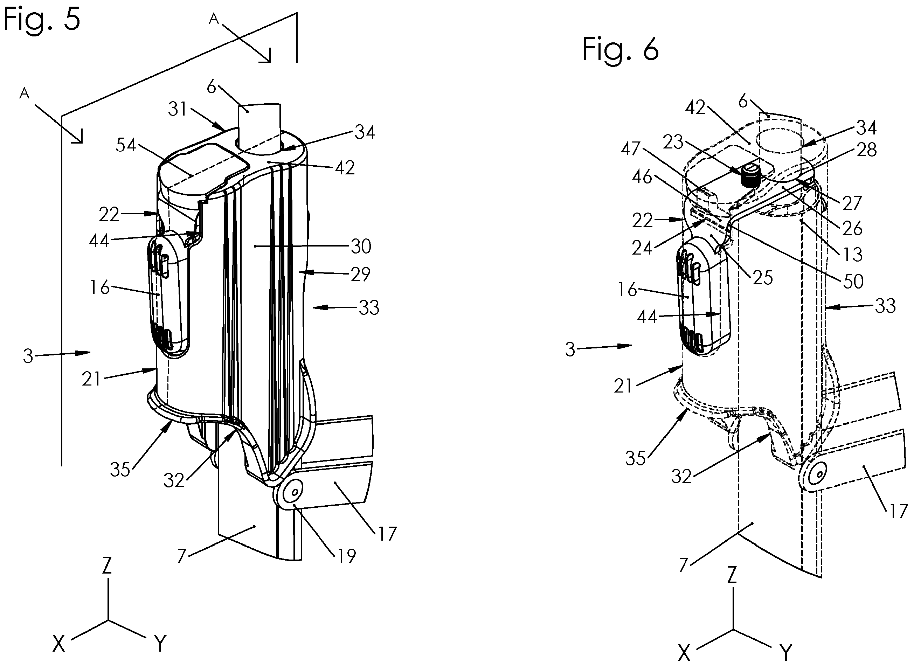

L'on s'intéresse désormais plus particulièrement à la description du système **3** de blocage, en se référant aux figures 5 à 10.

L'on définit par rapport au deuxième tube **7,** un repère orthogonal XYZ formant un trièdre direct, comprenant trois axes perpendiculaires deux à deux, à savoir :
- un axe X, définissant une direction longitudinale, horizontale,
- un axe Y, définissant une direction transversale, horizontale, qui avec l'axe X définit un plan XY horizontal,
- un axe Z, définissant une direction verticale, perpendiculaire au plan XY horizontal, et confondue avec une direction générale d'extension du stabilisateur **2.**

Dans la suite de la description, et en relation au repère défini ci-dessus, les termes "longitudinal" ou "longitudinalement" font référence à une direction confondue avec l'axe X, les termes "transversal" ou "transversalement" font référence à une direction confondue avec l'axe Y, et les termes "vertical" ou "verticalement" font référence à une direction confondue avec l'axe Z. Les termes de position absolue, tels que "avant", "arrière", "haut", "bas", "gauche", "droite", ou relatifs comme "dessus", "supérieur", "dessous", "inférieur", "extérieur", "intérieur" sont définis par rapport au deuxième tube **7.**

Comme représenté sur les figures 5 à 10, et plus particulièrement sur les figures 5 et 6, le système **3** de blocage comprend un moyen de support, par exemple un boitier **21,** un levier **22,** ainsi qu'un moyen de rappel tel qu'un plot **23** élastique.

Le boitier **21** est rendu solidaire au deuxième tube **7,** et comprend un bossage **24** servant notamment d'appui pour permettre la rotation du levier **22.**

Comme représenté sur la figure 6, le levier **22** se présente la forme d'une plaque, munie d'une partie **25** d'actionnement, et d'une partie **26** de blocage.

La partie **25** d'actionnement est munie du bouton **16,** la partie **26** de blocage comprend une ouverture **27,** présentant un contour **28,** homothétiquement supérieur à la section du premier tube **6.**

Avantageusement, le premier tube **6** se déplace au sein de l'ouverture **27,** un jeu fonctionnel de l'ordre par exemple de quelques millimètres, étant laissé entre le premier tube **6** et l'ouverture **27.** Un tel jeu permet de déplacer la partie **26** de blocage par rapport au premier tube **6.** De cette façon, la partie **26** de blocage est apte à se positionner en arc-boutement sur le premier tube **6.**

Le levier **22** est disposé de sorte que la partie **25** d'actionnement et la partie **26** de blocage sont toutes les deux disposées de part et d'autre du bossage **24.** Ainsi, lorsqu'une pression est appliquée par exemple vers le bas sur la partie **25** d'actionnement, le levier **22** pivote autour du bossage **24,** ce qui entraîne un déplacement vers le haut de la partie **26** de blocage.

Une pression sur la partie **25** d'actionnement permet de donner une orientation au levier **22,** et ainsi de faire évoluer l'angle entre la partie **26** de blocage et la direction d'extension du premier tube **6.**

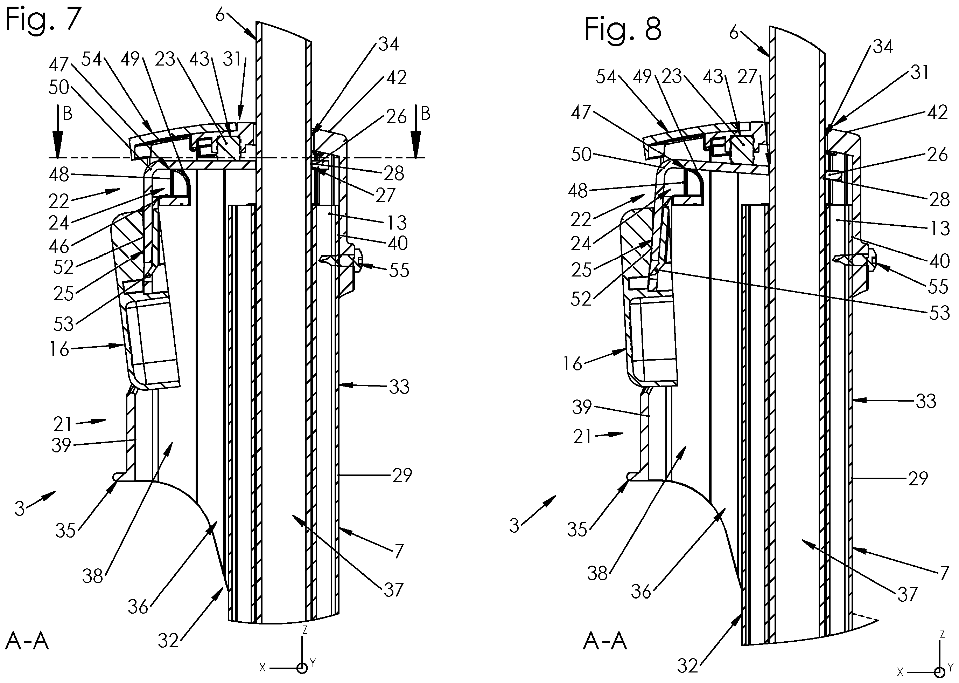

Dans une position de blocage, représentée figure 7, le levier positionne le contour **28** en contact avec le premier tube **6,** plus précisément en arc-boutement sur le premier tube **6.** L'ensemble **8** télescopique se bloque alors par adhérence.

En utilisation, le poids de l'échelle **1** avec sous l'utilisateur situé dessus a pour conséquence de créer une action mécanique par le premier tube **6** sur le contour **28..** Du fait du blocage du contour **28** sur le premier tube **6,** une telle action mécanique entraîne la partie **26** de blocage vers le bas, augmentant l'angle entre la partie **26** de blocage, et la direction d'extension du premier tube **6,** ce qui renforce davantage l'effet de blocage lié au phénomène d'arc-boutement. Aussi, l'accroissement de la charge augmente l'effort de blocage. Un tel effet est avantageux en termes de sécurité d'utilisation pour l'utilisateur.

En position de blocage, si l'utilisateur exerce un effort sur l'ensemble **8** télescopique visant à écarter le premier tube **6** du deuxième tube **7,** par exemple en tirant sur le deuxième tube **7** vers le bas ou sur le premier tube **6** vers le haut, le levier **8** en arc-boutement sur le premier tube **6** est entraîné en rotation vers le haut. Un tel déplacement réduit l'angle entre la partie **26** de blocage, et la direction d'extension du premier tube **6,** la portion de contour **28** en contact avec le premier tube **6,** ce qui limite l'effet d'adhérence causé par l'arc-boutement. Dans une position de déblocage du système **3** de blocage, représentée figure 8, le contour **28** n'est pas en contact avec le premier tube **6,** ce qui autorise le passage du premier tube **6** et permet d'obtenir l'extension ou la rétraction de l'ensemble **8** télescopique, autorisant tout déplacement du stabilisateur **2.**

Le plot **23,** disposé entre le boitier **21** et la partie **26** de blocage exerce un effort de poussée sur la partie **26** de blocage, c'est-à-dire tend à éloigner la partie **26** de blocage du boitier **21.** Le plot **23** vise à maintenir la partie **26** de blocage dans une situation d'équilibre, c'est-à-dire lorsque l'utilisateur n'exerce aucune pression sur le bouton **16.**

Une pression ou une poussée exercée sur le bouton **16** entraîne une sollicitation du levier **22,** à l'encontre du plot **23.** Suite à une telle action mécanique, le levier **22** pivote et écrase le plot **23,** tout en positionnant la partie **26** de blocage en position de déblocage. Le relâchement du bouton **16** entraîne une disparition de l'effort antagoniste au plot **23.** Le plot **23** reprend sa forme initiale, c'est-à-dire avant écrasement, en provoquant le retour du levier **22** à une position d'équilibre qui correspond à une position de blocage.

Un tel fonctionnement est avantageux, car il offre un moyen permettant de débloquer et bloquer l'ensemble **8** télescopique, respectivement par une action de pression, ou un simple relâchement du bouton **16.** A l'état d'équilibre, c'est-à-dire lorsque le bouton **16** n'est pas sollicité, le système **3** de blocage est en position de blocage. Le stabilisateur **2** est donc par défaut en position bloqué, ce qui évite toute erreur de l'utilisateur, et accroît la sécurité d'utilisation de l'échelle **1.**

Comme il apparaît sur les figures 6 à 10, le boitier **21** est avantageusement creux. Le boitier **21** comprend une paroi **29** extérieure définissant une forme sensiblement oblongue dans un plan transversal. Tel qu'il peut être observé sur la figure 8, le boitier présente avantageusement deux renfoncements **30** permettant par exemple aux doigts de s'agripper au système **3** de blocage, ce qui facilite le maintien de l'appui de la poignée à l'aide d'une seule main.

Dans les modes de réalisation représentés, le boitier **21** s'étend sensiblement selon une direction verticale entre une partie **31** supérieure et une partie **32** inférieure. Une partie **33** latérale relie la partie **31** supérieure à la partie **32** inférieure. La partie **31** supérieure est positionnée au voisinage de la deuxième partie **14** extrême, alors que la partie **32** inférieure est agencée au-dessus de l'articulation de la biellette **17.** De cette manière, le risque de se coincer les doigts lors du maniement du stabilisateur **2** est limité.

Comme représenté notamment sur la figure 5, la partie **31** supérieure comprend avantageusement une portion sensiblement plane, et un alésage **34** laissant passer le premier tube **6.** La partie **32** inférieure du boitier **21** présente un rebord **35** ménagé en saillie de la paroi **29** extérieure et d'une cavité **36,** ayant par exemple pour fonction de former un obstacle pour la main d'un utilisateur manipulant le système **3** de blocage.

La cavité **36** comprend avantageusement une portion **37** de fixation, permettant de recevoir le deuxième tube **7,** et une portion **38** d'actionnement permettant notamment l'accueil de la partie **25** d'actionnement du levier **22.**

Avantageusement, la portion **37** de fixation présente une paroi **39** intérieure définissant une fraction **40** de forme cylindrique, complémentaire au deuxième tube **7,** permettant de monter le deuxième tube **7** par emmanchement dans la portion **37** de fixation, le maintien en position étant réalisé à l'aide d'une vis **55** de fixation. La fraction **40** de forme cylindrique est avantageusement munie de crêtes **41,** limitant les surfaces de contact entre la paroi **39** intérieure et le deuxième tube **7,** ce qui facilite le montage.

Avantageusement, la partie **31** supérieure de la portion **37** de fixation comprend une zone **42** de dessus et l'alésage **34.** L'alésage **34** est avantageusement cylindrique et présente un diamètre suffisamment important pour permettre un déplacement du premier tube **6** sans contact avec l'alésage **34,** tout en évitant le risque d'introduction d'un doigt lors de la manipulation du stabilisateur **2,** ou d'autres corps étrangers.

La partie **31** supérieure comprend, par exemple au sein de la portion **37** de fixation, un logement **43** adapté à l'insertion du plot **23** élastique déformable, facilitant le montage. Le logement **43** est avantageusement réalisé par moulage au sein de la paroi **39** intérieure du boitier **21,** sur la partie **31** supérieure. De cette manière, le plot **23** fait saillie du logement **43** en étant orienté vers le bas, ce qui permet d'entrer au contact du levier **22.**

Dans les modes de réalisation représentés, le plot **23** est disposé entre le levier **22** et la partie **31** supérieure, de manière à exercer un effort de poussée, lorsque sollicité et déformé par le levier **22.** Un tel plot **23,** réalisé en élastomère, limite les coûts de fabrication, et s'oxyde moins rapidement que d'autres moyens de rappel, notamment métalliques, par exemple un ressort à spires jointives.

La portion **38** d'actionnement comprend notamment la partie **25** d'actionnement, le plot **23** et le bossage **24.** La partie **26** de blocage du levier **22** est comprise au sein de la portion **37** de fixation. Le boitier **21** entoure ainsi le levier **22,** le plot **23** et le bossage **24,** ce qui permet de créer une protection physique du mécanisme d'actionnement du système **3** de blocage. De cette façon, tout risque de pincement ou par exemple d'introduction involontaire d'un doigt est évité.

La portion **38** d'actionnement est pourvue d'un évidement **44** partant de la partie **31** supérieure et s'étendant jusqu'à une position prédéfinie de la partie **33** latérale. Une telle position correspond à la position atteinte par le bouton **16** lors de la rotation du levier **22** autour du bossage **24**.

L'évidement **44** débouche sur la partie **31** supérieure du boitier **21,** ce qui permet notamment l'introduction du levier **22.** Le montage du système **3** de blocage est ainsi facilité.

L'évidement **44** présente avantageusement des dimensions complémentaires à la dimension du levier **22,** de manière à ce qu'un jeu minimum soit laissé entre l'évidement et le levier **22.** De cette manière, un guidage optimal est assuré au levier par l'évidement **44,** permettant d'obtenir un mouvement du levier **22** sensiblement identique quelle que soit la localisation de l'effort de l'utilisateur sur le bouton **16.**

Selon les modes de réalisation représentés, le bossage **24** saille de la paroi **39** intérieure du boitier **21** et s'étend à la fois dans une direction verticale et transversale. Le bossage **24** présente des dimensions suffisantes pour permettre de supporter la charge exercée par le levier **22.**

Selon les modes de réalisation représentés sur les figures 6 à 8, le bossage **24** comprend un plateau **46** et au moins une section **47** d'appui. Le plateau **46,** qui s'étend tout du long de la largeur de l'évidement **44** joue un rôle de support pour la section **47** d'appui, permettant de limiter tout phénomène de concentration de contraintes autour du bossage **24.**

Avantageusement, le bossage **24** est muni d'au moins une section **47** d'appui, par exemple deux. Les sections **47** d'appui sont préférentiellement toutes les deux disposées contre la paroi **39** intérieure, comme il peut être observé sur la figure 10. De cette façon, les actions mécaniques exercées par le levier **22** sont reprises directement par la paroi **39** intérieure.

En se référant aux figures 7 et 8, il peut être remarqué que la section **47** d'appui présente avantageusement selon un plan vertical une forme de demi-lune. Autrement dit, la section **47** d'appui comprend une surface **48** verticale, une surface **49** incurvée. La surface **49** incurvée permet de faire pivoter le levier **22.**

Pour faciliter un tel pivotement, le levier **22** présente par exemple un coude **50,** entre la partie **25** d'actionnement et la partie **26** de blocage.

Dans les modes de réalisation représentés, la partie **25** d'actionnement comprend une portion **51** extrême, permettant l'insertion du bouton **16.** Le bouton **16** est agencé de manière à faire saillie de la paroi **29** extérieure du boitier **21** à l'équilibre, c'est-à-dire lorsque le système **3** de blocage est en état de blocage. Le bouton **16** est ainsi physiquement et visuellement accessible à l'utilisateur, facilitant la manipulation du stabilisateur **2.**

Dans les modes de réalisation représentés, le bouton **16** comprend une incision **52,** présentant une forme complémentaire à la partie **25** d'actionnement. De cette façon, le bouton **16** est engoncé au sein du levier **22.** Le maintien en position du bouton **16** est avantageusement accompli par l'intermédiaire d'une languette **53** élastique, faisant saillie au sein d'une anfractuosité ménagée sur la partie **25** d'actionnement.

Avantageusement, le boitier **21** comprend un couvercle **54,** clipsé à l'aide de deux encoches **45** ménagées sur la partie **31** supérieure, au sein de l'évidement **44.** De cette façon, l'accès au levier **22** est physiquement impossible, ce qui permet de prévenir tout risque d'introduction involontaire des doigts de l'utilisateur, et évite l'insertion de corps étranger ou tout autre obstacle gênant le fonctionnement du système **3** de blocage.

Afin de limiter les coûts de fabrication, le boitier **21,** donc le bossage **24,** sont par exemple obtenus par des procédés de fonderie.

Le système **3** de blocage présente un grand nombre d'avantages, comme par exemple:
- une grande facilité d'utilisation, nécessitant un nombre minimum de gestes, qui présentent un minimum de contraintes physiques pour l'utilisateur ;
- un blocage automatique du stabilisateur **2,** puisque le relâchement du bouton **16** par l'utilisateur permet de bloquer le premier tube **6,** ce qui élimine tout risque d'accident en raison d'un mauvais blocage du stabilisateur **2** ;
- une préhension d'une seule main, permettant de faciliter le déploiement et le rangement du stabilisateur **2** ;
- un montage aisé sur le stabilisateur **2,** réalisable en un nombre réduit d'opérations, et nécessitant qu'un usage limité d'outils ;
- un système **3** de blocage sûr d'utilisation, et minimisant les risques de pincements.

## Revendications

1. Système **(3)** de blocage du coulissement d'un premier tube **(6)** par rapport à un deuxième tube **(7)** d'un stabilisateur **(2)** d'un dispositif **(1)** de travail en hauteur, le système **(3)** de blocage comprenant :
• un moyen de support, destiné à être solidaire du deuxième tube **(7),** le moyen de support comprenant un bossage **(24),**
• un levier **(22)** comprenant une partie **(25)** d'actionnement, et une partie **(26)** de blocage, disposées de part et d'autre du bossage **(24),** la partie **(26)** de blocage comprenant une ouverture **(27)** destinée au déplacement du premier tube (**6**), le levier **(22)** pivotant autour du bossage **(24)** entre une position de déblocage apte à permettre le déplacement du premier tube **(6),** et une position de blocage apte à permettre le positionnement du premier tube **(6)** en arc-boutement sur l'ouverture **(27),**
• un moyen de rappel, disposé entre le moyen de support et la partie **(26)** de blocage, le moyen de rappel exerçant un effort de rappel sur la partie **(26)** de blocage maintenant le levier **(22)** en position de blocage,
le moyen de rappel exerce un effort de poussée sur la partie (26) de blocage, de telle sorte qu'une action de pression appliquée sur la partie d'actionnement fasse pivoter le levier **(22),** entraînant le positionnement du moyen de blocage en position de déblocage, le système (3) de blocage étant **caractérisé en ce que** le levier **(22)** se présentant sous la forme d'une plaque munie de la partie **(25)** d'actionnement et de la partie **(26)** de blocage.

2. Système de blocage selon la revendication précédente, **caractérisé en ce que** le moyen de support comprend un boitier **(21)** entourant la partie **(26)** de blocage et le moyen de rappel.

3. Système de blocage selon la revendication précédente, **caractérisé en ce que** le boitier **(21)** comprend un évidement **(44)** présentant des dimensions complémentaire à la partie **(25)** d'actionnement.

4. Système de blocage selon la revendication 2 ou 3, **caractérisé en ce que** le boitier (21) comprend un alésage (34) destiné au passage du premier tube (6) et une fraction (40) de forme cylindrique de dimension supérieure à l'alésage (34), la fraction (40) de forme cylindrique étant destinée à être emmanchée sur le deuxième tube (7).

5. Système de blocage selon l'une quelconque des revendications précédentes, **caractérisé en ce que** le bossage **(24)** est pourvu une section **(47)** d'appui comprenant une surface **(49)** incurvée, en contact avec le levier **(22),** la section d'appui étant configurée pour permettre la rotation du levier **(22).**

6. Système de blocage selon l'une quelconque des revendications précédentes, **caractérisé en ce que** le moyen de rappel comprend un plot **(23)** élastique déformable.

7. Système de blocage selon l'une quelconque des revendications précédentes, **caractérisé en ce qu'**il comprend un bouton **(16),** monté enfoncé et maintenu enclipsé sur une portion **(51)** extrême de la partie **(25)** d'actionnement.

8. Stabilisateur **(2)** télescopique d'un dispositif **(1)** de travail en hauteur, le stabilisateur comprenant :
• un premier tube **(6),**
• un deuxième tube **(7),**
• un système **(3)** de blocage selon l'une quelconque des revendications précédentes, le système **(3)** de blocage étant solidaire par rapport au deuxième tube **(7),** le premier tube **(6)** traversant l'ouverture.

9. Dispositif **(1)** de travail en hauteur intégrant un stabilisateur **(2)** selon la revendication précédente.

## Patentansprüche

1. Verriegelungssystem (3) des Gleitens einer ersten Röhre (6) in Bezug auf eine zweite Röhre (7) eines Stabilisators (2) einer Arbeitsvorrichtung in der Höhe, wobei das Verriegelungssystem (3) umfasst:
• ein Trägermittel, das dazu bestimmt ist, fest mit der zweiten Röhre (7) befestigt zu sein, wobei das Trägermittel einen Buckel (24) umfasst,
• einen Hebel (22), der ein Betätigungsteil (25) und ein Verriegelungsteil (26) umfasst, die auf jeder Seite des Buckels (24) angeordnet sind, wobei das Verriegelungsteil (26) eine Öffnung (27) umfasst, die zum Verschieben der ersten Röhre (6) bestimmt ist, wobei der Hebel (22) um den Buckel (24) zwischen einer Entriegelungsposition, die geeignet ist, um das Verschieben der ersten Röhre (6) zu ermöglichen, und einer Verriegelungsposition, die geeignet ist, um die Positionierung der ersten Röhre (6) in Selbsthemmung auf der Öffnung (27) zu ermöglichen, schwenkt,
• ein Rückholmittel, das zwischen dem Trägermittel und dem Verriegelungsteil (26) angeordnet ist, wobei das Rückholmittel eine Rückholkraft auf das Verriegelungsteil (26) ausübt, das den Hebel (22) in Verriegelungsposition hält, das Rückholmittel übt eine Schubkraft auf das Verriegelungsteil (26) derart aus, dass eine Druckwirkung, die auf das Betätigungsteil ausgeübt ist, den Hebel (22) zum Schwenken bringt und damit die Positionierung des Verriegelungsmittels in der Entriegelungsposition antreibt, wobei das Verriegelungssystem (3) **dadurch gekennzeichnet ist, dass** der Hebel (22) die Form einer Platte aufweist, die mit dem Betätigungsteil (25) und dem Verriegelungsteil (26) versehen ist.

2. Verriegelungssystem gemäß dem voranstehenden Anspruch, **dadurch gekennzeichnet, dass** das Trägermittel ein Gehäuse (24) umfasst, das das Verriegelungsteil (26) und das Rückholmittel umgibt.

3. Verriegelungssystem gemäß dem voranstehenden Anspruch, **dadurch gekennzeichnet, dass** das Gehäuse (21) eine Ausnehmung (44) umfasst, die zu dem Betätigungsteil (25) komplementäre Abmessungen aufweist.

4. Verriegelungssystem gemäß Anspruch 2 oder 3, **dadurch gekennzeichnet, dass** das Gehäuse (21) eine Bohrung (34), die zum Hindurchtreten der ersten Röhre (6) bestimmt ist, und einen Abschnitt (40) in zylindrischer Form mit einer größeren Abmessung als die Bohrung (34) umfasst, wobei der Abschnitt (40) in zylindrischer Form dazu bestimmt ist, auf die zweite Röhre (7) aufgedrückt zu sein.

5. Verriegelungssystem gemäß irgendeinem der voranstehenden Ansprüche, **dadurch gekennzeichnet, dass** der Buckel (24) mit einem Stützquerschnitt (47) versehen ist, der eine gekrümmte Fläche (49) umfasst, die mit dem Hebel (22) in Kontakt ist, wobei der Stützquerschnitt ausgestaltet ist, um die Drehung des Hebels (22) zu ermöglichen.

6. Verriegelungssystem gemäß irgendeinem der voranstehenden Ansprüche, **dadurch gekennzeichnet, dass** das Rückholmittel einen verformbaren, elastischen Klotz (23) umfasst.

7. Verriegelungssystem gemäß irgendeinem der voranstehenden Ansprüche, **dadurch gekennzeichnet, dass** es einen Knopf (16) umfasst, der in einer Endposition (51) des Betätigungsteils (25) eingedrückt montiert und eingerastet gehalten ist.

8. Teleskopischer Stabilisator (2) einer Arbeitsvorrichtung (1) in der Höhe, wobei der Stabilisator umfasst:
• eine erste Röhre (6),
• eine zweite Röhre (7),
• ein Verriegelungssystem (3) gemäß irgendeinem der voranstehenden Ansprüche, wobei das Verriegelungssystem (3) in Bezug auf die zweite Röhre (7) fest befestigt ist, wobei die erste Röhre (6) die Öffnung durchquert.

9. Arbeitsvorrichtung (1) in der Höhe, die einen Stabilisator (2) gemäß dem voranstehenden Anspruch beinhaltet.

## Claims

1. A system (3) for blocking sliding of a first tube (6) relative to a second tube (7) of a stabiliser (2) of a work at height device (1), the blocking system (3) comprising:
• a support means, for being integral with the second tube (7), the support means comprising a boss (24),
• a lever (22) comprising an actuating part (25), and a blocking part (26), disposed on either side of the boss (24), the blocking part (26) comprising an opening (27) for moving the first tube (6), the lever (22) pivoting about the boss (24) between an unblocking position able to enable the first tube (6) to be moved, and a blocking position able to enable the first tube (6) to be positioned on the opening (27) in an arching manner,
• a return means, disposed between the support means and the blocking part (26), the return means exerting a return force on the blocking part (26) holding the lever (22) in a blocking position,
the return means exerts a thrust force on the blocking part (26), so that a pressing action applied to the actuating part pivots the lever (22), causing the blocking means to be positioned into an unblocking position, the blocking system (3) being **characterised in that** the lever (22) is in the form of a plate provided with the actuating part (25) and blocking part (26).

2. The blocking system according to the previous claim, **characterised in that** the support means comprises a casing (21) surrounding the blocking part (26) and return means.

3. The blocking system according to the previous claim, **characterised in that** the casing (21) comprises a recess (44) having dimensions complementary to the actuating part (25).

4. The blocking system according to claim 2 or 3, **characterised in that** the casing (21) comprises a bore (34) for passing the first tube (6) and a cylindrical-shaped fraction (40) having a greater dimension than the bore (34), the cylindrical-shaped fraction (40) being to be fitted to the second tube (7).

5. The blocking system according to any of the previous claims, **characterised in that** the boss (24) is provided with a bearing section (47) comprising a curved surface (49), in contact with the lever (22), the pressing section being configured to enable the lever (22) to be rotated.

6. The blocking system according to any of the previous claims, **characterised in that** the return means comprises a deformable elastic stud (23).

7. The blocking system according to any of the previous claims, **characterised in that** it comprises a button (16), mounted depressed and held clicked on an end portion (51) of the actuating part (25).

8. A telescopic stabiliser (2) of a work at height device (1), the stabiliser comprising:
• a first tube (6),
• a second tube (7),
• a blocking system (3) according to any of the previous claims, the blocking system (3) being integral with the second tube (7), the first tube (6) passing through the opening.

9. The work at height device (1) integrating a stabiliser (2) according to the previous claim.
